# EUROPÄISCHE PATENTANMELDUNG

(11) **EP 3 604 796 A1**
(43) Veröffentlichungstag der Anmeldung: **05.02.2020**
(21) Anmeldenummer: 19186543.5
(22) Anmeldetag: 16.07.2019
(51) Int. Cl.: F03D 1/06

(54) **ROTORBLATT FÜR EINE WINDENERGIEANLAGE, WINDENERGIEANLAGE, VERFAHREN ZUM VERLÄNGERN EINES ROTORBLATTS SOWIE VERFAHREN ZUM HERSTELLEN EINES ROTORBLATTS**

(30) Priorität: 30.07.2018 DE 102018005965
(71) Anmelder: SENVION GmbH, 22297 Hamburg (DE)
(72) Erfinder: KORJAHN, Matthias, 24768 Rendsburg (DE)
(74) Vertreter: Hahner, Ralph

(57) **Zusammenfassung**

Die Erfindung betrifft ein Rotorblatt für eine Windenergieanlage, eine Windenergieanlage, ein Verfahren zum Verlängern wenigstens eines Rotorblatts für eine Windenergieanlage sowie ein Verfahren zum Konstruieren eines Rotorblatts für eine Windenergieanlage. Das Rotorblatt weist einen ersten Bereich, welcher sich ausgehend von der Rotorblattwurzel radial nach außen hin erstreckt, und einen zweiten Bereich, welcher an den ersten Bereich angrenzt und sich radial nach außen bis zu der Rotorblattspitze hin erstreckt, auf, wobei der erste Bereich im montierten Zustand an der Windenergieanlage bei Rotation eine Rotationsfläche aufspannt, aus welcher sich der zweite Bereich heraushebt, und wobei der zweite Bereich in Abhängigkeit einer Länge, einer Krümmung und einer Biegesteifigkeit des ersten Bereichs derart ausgebildet ist, sodass das Rotorblatt in montiertem Zustand an der Windenergieanlage während des Betriebs der Windenergieanlage im Nennlastbereich, insbesondere unter Extremlast, bei einem durch den Wind verursachten Verbiegen des Rotorblatts, insbesondere des ersten Bereichs, in Schlagrichtung einen vorbestimmten, vorzugsweise im Wesentlichen über die Länge des zweiten Bereichs konstanten, Mindestabstand von einem Turm der Windenergieanlage einhält.

## Beschreibung

Die Erfindung betrifft ein Rotorblatt für eine Windenergieanlage, eine Windenergieanlage, ein Verfahren zum Verlängern wenigstens eines Rotorblatts für eine Windenergieanlage sowie ein Verfahren zum Konstruieren eines Rotorblatts für eine Windenergieanlage.

Aufgrund des Klimawandels soll langfristig die Energiegewinnung hauptsächlich durch erneuerbare Energien erfolgen. Hierzu zählt u.a. auch die Windenergie, weshalb in diesem Bereich der Energiegewinnung Windenergieanlagen eine zentrale Rolle spielen.

Durch einen an der Windenergieanlage einfallenden Wind werden ein oder mehrere Rotorblätter der Windenergieanlage in Rotation versetzt, wodurch ein in der Windenergieanlage befindlicher Generator angetrieben und daraus resultierend elektrischer Strom erzeugt wird.

Aus der DE 10 2012 107 221 A1 ist beispielsweise bekannt, dass ein Rotorblatt einen Blattfuß, eine Blattspitze und einen Körper aufweist. Der Körper kann einen sich von dem Blattfuß aus erstreckenden Basisabschnitt und ein sich von dem Basisabschnitt zu der Blattspitze erstreckendes Winglet enthalten. Zusätzlich kann wenigstens ein Abschnitt des Winglets für eine von dem Basisabschnitt unabhängige Verstellung eingerichtet sein.

Es ist eine Aufgabe der Erfindung ein verbessertes Rotorblatt für eine Windenergieanlage bereitzustellen. Insbesondere ist es eine Aufgabe der Erfindung, wenigstens eine aerodynamische Eigenschaft eines Rotorblatts für eine Windenergieanlage zu verbessern.

Diese Aufgabe wird gelöst durch ein Rotorblatt für eine Windenergieanlage, eine Windenergieanlage, ein Verfahren zum Verlängern wenigstens eines Rotorblatts für eine Windenergieanlage sowie ein Verfahren zum Konstruieren eines Rotorblatts für eine Windenergieanlage gemäß den unabhängigen Ansprüchen.

Ein erster Aspekt der Erfindung betrifft ein Rotorblatt für eine Windenergieanlage mit einem Luv-Rotor, wobei das Rotorblatt einen ersten Bereich, welcher sich ausgehend von der Rotorblattwurzel radial nach außen hin erstreckt, und einen zweiten Bereich, welcher an den ersten Bereich angrenzt und sich radial nach außen bis zu der Rotorblattspitze hin erstreckt, aufweist, wobei der erste Bereich im montierten Zustand an der Windenergieanlage bei Rotation eine Rotationsfläche aufspannt, aus welcher sich der zweite Bereich heraushebt, und wobei der zweite Bereich in Abhängigkeit einer Länge, einer Krümmung und einer Biegesteifigkeit des ersten Bereichs derart ausgebildet ist, sodass das Rotorblatt in montiertem Zustand an der Windenergieanlage während des Betriebs der Windenergieanlage im Nennlastbereich, insbesondere unter Extremlast, bei einem durch den Wind verursachten Verbiegen des Rotorblatts, insbesondere des ersten Bereichs, in Schlagrichtung einen vorbestimmten, vorzugsweise im Wesentlichen über die Länge des zweiten Bereichs konstanten, Mindestabstand von einem Turm der Windenergieanlage einhält.

Der Wirkungsgrad einer Windenergieanlage ist unter anderem von der Länge der Rotorblätter abhängig, da bei längeren Rotorblättern mehr Angriffsfläche für den Wind zur Verfügung steht als bei kürzeren Rotorblättern. Jedoch ist aufgrund eines einzuhaltenden Mindestabstands zwischen den Rotorblättern und dem Turm während des Betriebs der Windenergieanlage im Nennlastbereich eine maximale Länge der Rotorblätter vorbestimmt, um die Gefahr einer Kollision zwischen den Rotorblättern und dem Turm zu verringern, insbesondere zu verhindern. Die Erfindung beruht daher auf der Idee, eine effektive Länge eines Rotorblatts einer Windenergieanlage unter Berücksichtigung eines Abstandes zwischen dem Rotorblatt und dem Turm der Windenergieanlage während dessen Betrieb zu erhöhen.

Auf diese Weise kann erreicht werden, dass das Rotorblatt unter Einhaltung eines Mindestabstands zu einem Turm der Windenergieanlage länger ausgebildet sein kann als bisher vorhandene Rotorblätter, da die Gefahr einer Berührung des Rotorblatts während dessen Betrieb mit dem Turm vernachlässigbar, vorzugsweise verhinderbar, ist. Dies beruht insbesondere darauf, dass das Rotorblatt wenigstens teilweise gekrümmt und/oder gebogen ausgebildet ist, sodass ein durch den Wind verursachtes Verbiegen des Rotorblatts, insbesondere des ersten Bereichs, wenigstens teilweise ausgleichbar ist.

Ein Luv-Rotor im Sinne der Erfindung ist ein Rotor, welcher sich in Schlagrichtung des Windes im Wesentlichen vor dem Turm befindet.

Eine Schlagrichtung im Sinne der Erfindung ist die Richtung, in welcher der Wind im Wesentlichen auf die Rotorblätter einer Windenergieanlage einfällt.

Eine Rotationsfläche im Sinne der Erfindung ist eine imaginäre Fläche, die bei Rotation des ersten Bereichs des Rotorblatts im montierten Zustand an der Windenergieanlage aufgespannt wird. Die Rotationsfläche kann insbesondere in Abhängigkeit des Rotorblatts wenigstens teilweise uneben, vorzugsweise wenigstens teilweise gekrümmt und/oder Kanten aufweisend ausgebildet sein.

Ein Nennlastbereich im Sinne der Erfindung ist ein Bereich, in welchem eine Windenergieanlage mit maximaler Leistung betreibbar ist. Der Nennlastbereich wird vorzugsweise durch einen Nenn-Arbeitspunkt charakterisiert, wobei der Nenn-Arbeitspunkt vorzugsweise den Arbeitspunkt mit maximaler Leistung angibt, bei welchem Extremlasten an der Windenergieanlage auftreten. Insbesondere kann der Nennlastbereich auch wenigstens teilweise über diesem Nenn-Arbeitspunkt einer Windenergieanlage liegen. Vorzugsweise erfolgt ein Überschreiten des Nennlastbereichs jedoch lediglich für einen kurzen Zeitraum, so dass aus dem Überschreiten vorzugsweise keine bleibenden Schäden an der Windenergieanlage resultieren. Im Allgemeinen wird der Nennlastbereich vom Hersteller einer Anlage für diese Anlage angegeben.

Ein Mindestabstand im Sinne der Erfindung ist der kleinste Abstand, welchen ein Rotorblatt während des Betriebs einer Windenergieanlage unterhalb der Rotornabe zum Turm der Windenergieanlage hin aufweist. Insbesondere variiert der Abstand des Rotorblatts zum Turm in Abhängigkeit des Windes und dessen Krafteinwirkung auf das Rotorblatt.

In einer bevorzugten Ausgestaltung verläuft der zweite Bereich in Längsrichtung des Rotorblatts im Wesentlichen geradlinig. Dadurch wird ermöglicht, dass das Rotorblatt optimierte aerodynamische Eigenschaften aufweist.

In einer weiteren bevorzugten Ausgestaltung hält jeder Abschnitt des zweiten Bereichs des Rotorblatts während des Betriebs der Windenergieanlage im Nennlastbereich bei einem durch den Wind verursachten Verbiegen des Rotorblatts, insbesondere des ersten Bereichs, in Schlagrichtung einen wenigstens im Wesentlichen konstanten Abstand zu dem Turm der Windenergieanlage ein, welcher wenigstens dem Mindestabstand entspricht.

In einer weiteren bevorzugten Ausgestaltung spannen der zweite Bereich des Rotorblatts und die Rotationsfläche einen Winkel zwischen etwa 5° und etwa 90°, vorzugsweise zwischen etwa 10° und etwa 60°, weiter vorzugsweise zwischen etwa 20° und etwa 40°, und am bevorzugtesten von etwa 30°, auf. Auf diese Weise kann aufgrund der geometrischen Verhältnisse der Abstand zwischen Rotorblatt und Turm weiter erhöht werden.

In einer weiteren bevorzugten Ausgestaltung betrifft das Ausbilden des zweiten Bereichs des Rotorblatts eine Biegesteifigkeit des zweiten Bereichs in Schlagrichtung, eine Ausrichtung des zweiten Bereichs zu dem ersten Bereich und/oder eine etwaige Krümmung des zweiten Bereichs. Auf diese Weise kann unter Berücksichtigung verschiedener Einflüsse das Rotorblatt zusätzlich verlängert werden.

In einer weiteren bevorzugten Ausgestaltung weist das Rotorblatt im Bereich eines Übergangs vom ersten Bereich zum zweiten Bereich des Rotorblatts eine Krümmung mit einem vorbestimmten Radius, vorzugsweise von etwa 10 cm bis etwa 1 m, weiter vorzugsweise von etwa 30 cm bis etwa 70 cm, am bevorzugtesten von etwa 50 cm, auf. Vorzugweise ist der Übergang Bestandteil des ersten Bereichs und/oder des zweiten Bereichs des Rotorblatts.

Mittels dieser Ausgestaltung des Bereichs des Übergangs vom ersten zum zweiten Bereich des Rotorblatts wird eine kraftflussgerechte Gestaltung des Bereichs umgesetzt. Hierdurch können insbesondere Belastungsspitzen in dem Bereich vermieden werden. Dadurch wird der Bereich widerstandsfähiger und kann vorzugsweise sogar durch geringeren Materialeinsatz leichter ausgestaltet werden.

In einer weiteren bevorzugten Ausgestaltung entspricht der zweite Bereich einem Anteil des Rotorblatts von bis zu 30 %, vorzugsweise 2 % bis 20 %, weiter vorzugsweise 4 % bis 10 %, und am bevorzugtesten etwa 5 %. Somit kann erreicht werden, dass in Abhängigkeit der Länge des Rotorblatts die aerodynamischen Eigenschaften des Rotorblatts optimiert sind.

Ein zweiter Aspekt der Erfindung betrifft eine Windenergieanlage aufweisend einen Luv-Rotor mit wenigstens zwei Rotorblättern gemäß dem ersten Aspekt der Erfindung.

Ein dritter Aspekt der Erfindung betrifft ein Verfahren zum Verlängern wenigstens eines Rotorblatts für eine Windenergieanlage mit einem Luv-Rotor, insbesondere gemäß dem ersten Aspekt der Erfindung, folgende Schritte aufweisend:
- Ablängen eines Rotorblatts, wobei ein erster Teil des Rotorblatts sich ausgehend von einem Ablängbereich zur Rotorblattspitze hin erstreckt; und
- Zusammenfügen eines zweiten Teils des Rotorblatts, welcher sich von dem Ablängbereich zur Rotorblattwurzel hin erstreckt, mit einer Erweiterung zum Verlängern des Rotorblatts,
wobei der zweite Teil des Rotorblatts im montierten Zustand an der Windenergieanlage bei Rotation eine Rotationsfläche aufspannt, aus welcher sich die Erweiterung zur Blattspitze hin im zusammengefügten Zustand wenigstens teilweise heraushebt, und wobei die Erweiterung in Abhängigkeit einer Länge, einer Krümmung und einer Biegesteifigkeit des zweiten Teils des Rotorblatts derart ausgebildet ist, sodass das zusammengefügte Rotorblatt im montierten Zustand an der Windenergieanlage während des Betriebs der Windenergieanlage im Nennlastbereich, insbesondere unter Extremlast, bei einem durch den Wind verursachten Verbiegen des Rotorblatts, insbesondere des zweiten Teils, in Schlagrichtung einen, vorzugsweise im Wesentlichen konstanten, vorbestimmten Mindestabstand von einem Turm der Windenergieanlage einhält.

Auf diese Weise kann ermöglicht werden, dass bereits bestehende Rotorblätter derart verlängerbar sind, dass diese während des Betriebs an einer Windenergieanlage einen vorbestimmten Mindestabstand zu dem Turm der Windenergieanlage einhalten.

Ein Ablängen im Sinne der Erfindung betrifft ein Verkleinern einer Länge des Rotorblatts. Dies kann vorzugsweise mittels Absägen und/oder Schneiden und/oder Schleifen erfolgen.

Ein Ablängbereich im Sinne der Erfindung ist derjenige Bereich des Rotorblatts, welcher im Wesentlichen dazu vorgesehen ist, wenigstens teilweise abgelängt zu werden.

In einer bevorzugten Ausgestaltung weist das Verfahren zum Verlängern wenigstens eines Rotorblatts des Weiteren folgenden Schritt auf:
- Anschleifen und/oder Abschrägen des zweiten Teils des Rotorblatts in dem Ablängbereich.

Dadurch wird ermöglicht, dass die Erweiterung zum Verlängern des Rotorblatts optimiert an den bestehenden zweiten Teil des Rotorblatts befestigbar ist.

Ein vierter Aspekt der Erfindung betrifft ein Verfahren zum Konstruieren eines Rotorblatts für eine Windenergieanlage mit einem Luv-Rotor, insbesondere gemäß dem ersten Aspekt der Erfindung, dessen Schalenteile in einer mehrteiligen, insbesondere radial teilbaren, Negativform ausgebildet, insbesondere laminiert, werden, wobei ein erster Teil der Negativform einen ersten Bereich des Rotorblatts, welcher sich ausgehend von der Rotorblattwurzel radial nach außen hin erstreckt, beinhaltet und ein zweiter Teil der Negativform einen zweiten Bereich des Rotorblatts, welcher an den ersten Bereich des Rotorblatts angrenzt und sich radial nach außen bis zu der Rotorblattspitze hin erstreckt, wenigstens teilweise beinhaltet, wobei der erste Teil der Negativform in der Weise ausgebildet ist, dass der erste Bereich des Rotorblatts im montierten Zustand an der Windenergieanlage bei Rotation eine Rotationsfläche aufspannt, und wobei der zweite Teil der Negativform in der Weise ausgebildet ist, dass der zweite Bereich des Rotorblatts sich zur Blattspitze hin wenigstens teilweise aus der Rotationsfläche heraushebt und dass der zweite Bereich des Rotorblatts in Abhängigkeit einer Länge, einer Krümmung und einer Biegesteifigkeit des ersten Bereichs des Rotorblatts derart ausgebildet wird, sodass das Rotorblatt in montiertem Zustand an der Windenergieanlage während des Betriebs der Windenergieanlage im Nennlastbereich, insbesondere unter Extremlast, bei einem durch den Wind verursachten Verbiegen des Rotorblatts, insbesondere des ersten Bereichs, in Schlagrichtung einen vorbestimmten, vorzugsweise im Wesentlichen konstanten, Mindestabstand von einem Turm der Windenergieanlage einhält.

Auf diese Weise kann ermöglicht werden, dass in Abhängigkeit einer bestimmten Windenergieanlage ein Rotorblatt für diese fertigbar ist, welches über optimierte Eigenschaften für diese Windenergieanlage verfügt. Die Teile der Negativformen können hierbei getrennt ausgewählt werden, so dass ein bestehender Teil beispielsweise für den ersten Bereich des Rotorblatts um einen neuen Teil einer Negativform für einen neu konzipierten zweiten Bereich ergänzt werden kann. Dies spart Produktionskosten und erhöht die Flexibilität bei der Produktion der Rotorblätter.

Ein Schalenteil im Sinne der Erfindung ist ein dreidimensionaler Körper, welcher dazu eingerichtet ist, mittels wenigstens einem weiteren Körper, insbesondere einem weiteren Schalenteil, zu einem Rotorblatt zusammengefügt zu werden.

Unter Konstruieren im Sinne der Erfindung wird vorzugsweise auch ein Herstellen und/oder ein Entwerfen eines Rotorblatts verstanden.

In einer bevorzugten Ausgestaltung wird ein Design des zweiten Teils der Negativform aus einer Vielzahl an möglichen Designs ausgewählt, welche im Zusammenhang mit dem ersten Teil der Negativform einen modularen Baukasten darstellen.

Dadurch kann erreicht werden, dass in Abhängigkeit der Windenergieanlage, an welche das Rotorblatt montiert werden soll, die Länge und/oder Form des Rotorblatts anpassbar ist. Insbesondere kann durch Kombinieren verschiedener Designs der Teile der Negativform eine Vielzahl an möglichen Ausgestaltungen eines Rotorblatts realisiert werden.

In einer weiteren bevorzugten Ausgestaltung werden der erste Teil der Negativform und der zweite Teil der Negativform in einem Arbeitsschritt durch Befestigungsmittel verbunden. Somit können der erste und der zweite Teil der Negativform dauerhaft miteinander verbunden werden, um ein unbeabsichtigtes Trennen des ersten und zweiten Teils der Negativform voneinander während des Herstellungsprozesses zu verhindern.

In einer weiteren bevorzugten Ausgestaltung sind der erste Teil und/oder der zweite Teil der Negativform in der Weise ausgebildet, dass der zweite Bereich des Rotorblatts und die Rotationsfläche einen Winkel zwischen etwa 5° und etwa 90°, vorzugsweise zwischen etwa 10° und etwa 60°, weiter vorzugsweise zwischen etwa 20° und etwa 40°, und am bevorzugtesten von etwa 30°, aufspannen. Auf diese Weise kann in Abhängigkeit der Länge des Rotorblatts der zweite Bereich des Rotorblatts derart ausgelegt werden, dass der Mindestabstand des Rotorblatts zum Turm hin einhaltbar ist.

In einer weiteren bevorzugten Ausgestaltung sind der erste Teil und/oder der zweite Teil der Negativform in der Weise ausgebildet, dass das Rotorblatt im Übergangsbereich vom ersten Bereich zum zweiten Bereich des Rotorblatts eine Krümmung mit einem vorbestimmten Radius, vorzugsweise von etwa 10 cm bis etwa 1 m, weiter vorzugsweise von etwa 30 cm bis etwa 70 cm, am bevorzugtesten von etwa 50 cm, aufweist.

Die in Bezug auf den ersten Aspekt der Erfindung und dessen vorteilhafte Ausgestaltung beschriebenen Merkmale und Vorteile gelten auch für den zweiten, dritten, und vierten Aspekt der Erfindung und dessen vorteilhafte Ausgestaltung sowie umgekehrt.

Weitere Merkmale, Vorteile und Anwendungsmöglichkeiten der Erfindung ergeben sich aus der nachfolgenden Beschreibung von Ausführungsbeispielen im Zusammenhang mit den Figuren, in denen dieselben Bezugszeichen für dieselben oder einander entsprechende Elemente der Erfindung verwendet werden. Es zeigen wenigstens teilweise schematisch:
- **Fig.** 1: ein Ausführungsbeispiel einer Windenergieanlage in der Seitenansicht;
- Fig. 2: ein Ausführungsbeispiel eines Rotorblatts im Querschnitt;
- Fig. 3: ein weiteres Ausführungsbeispiel eines Rotorblatts im Querschnitt; und
- Fig. 4: ein Beispiel eines Flussdiagramms eines Verfahrens zum Verlängern wenigstens eines Rotorblatts für eine Windenergieanlage mit einem Luv-Rotor.

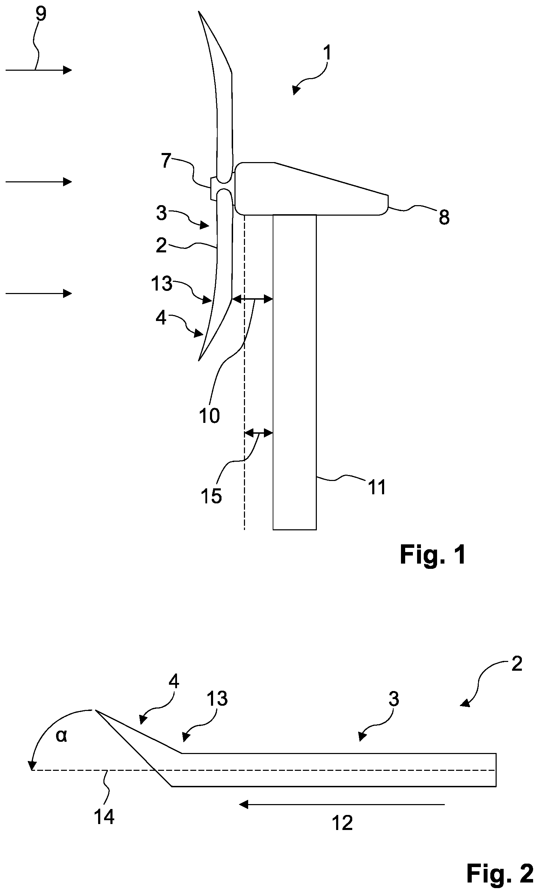

**Fig. 1** zeigt ein Ausführungsbeispiel einer Windenergieanlage 1 in der Seitenansicht.

An der Spitze eines Turms 11 der Windenergieanlage 1 ist dabei eine Gondel 8 angeordnet. An dieser ist wiederum eine Rotornabe 7 mit mindestens zwei Rotorblättern 2 angeordnet, wobei die Gondel 8 derart angeordnet ist, sodass der Rotor der Windenergieanlage 1 als Luv-Rotor ausgebildet ist, d.h. dass die Rotorblätter 2 in Windrichtung vor dem Turm 11 angeordnet sind und somit die Rotorblätter 2 gegen den Turm 11 "gedrückt" werden.

Dazu strömt Wind in Schlagrichtung 9 an die Rotorblätter 2, sodass diese wenigstens teilweise verbogen werden, wobei diese auch im Nennlastbereich, insbesondere unter Extremlast, einen Mindestabstand 15 zum Turm 11 einhalten.

Vorzugsweise hält jeder Abschnitt eines zweiten Bereichs 4 des Rotorblatts 2 während des Betriebs der Windenergieanlage 1 im Nennlastbereich bei einem durch den Wind verursachten Verbiegen des Rotorblatts 2, insbesondere eines ersten Bereichs 3 des Rotorblatts 2, in Schlagrichtung 9 einen wenigstens im Wesentlichen konstanten Abstand 10 zu dem Turm 11 der Windenergieanlage 1 ein, welcher wenigstens dem Mindestabstand 15 entspricht.

Wie in dieser Darstellung ersichtlich, wird der Abstand 10 zwischen Rotorblatt 2 und Turm 11 am kleinsten Abstand 10 zwischen Turm 11 und Rotorblatt 2, wie in diesem Beispiel im Bereich des Übergangs 13 vom ersten Bereich 3 zum zweiten Bereich 4 des Rotorblatts 2, gemessen. Alternativ kann auch jeder andere Abschnitt des zweiten Bereichs 4, mehrere Abschnitte des zweiten Bereichs 4 gemeinsam oder der gesamte zweite Bereich 4 des Rotorblatts 2 einen geringsten Abstand 10 zum Turm 11 aufweisen. Insbesondere wird der Abstand 15 zum Turm 11 lediglich unterhalb der Gondel 8 gemessen.

**Fig. 2** zeigt ein Ausführungsbeispiel eines Rotorblatts 2 im Querschnitt. Das Rotorblatt 2 weist dabei einen ersten Bereich 3, welcher sich ausgehend von der Rotorblattwurzel 5 radial nach außen hin erstreckt, und einen zweiten Bereich 4, welcher an den ersten Bereich 3 angrenzt und sich radial nach außen bis zu der Rotorblattspitze 6 hin erstreckt, auf. Der erste Bereich 3 des Rotorblatts 2 spannt dabei im montierten Zustand an der Windenergieanlage 1 bei Rotation eine Rotationsfläche 14 auf, aus welcher sich der zweite Bereich 4 des Rotorblatts 2 heraushebt.

Des Weiteren ist der zweite Bereich 4 des Rotorblatts 2 in Abhängigkeit einer Länge, einer Krümmung und einer Biegesteifigkeit des ersten Bereichs 3 des Rotorblatts 2 derart ausgebildet, sodass das Rotorblatt 2 in montiertem Zustand an der Windenergieanlage 1 während des Betriebs der Windenergieanlage 1 im Nennlastbereich, insbesondere unter Extremlast, bei einem durch den Wind verursachten Verbiegen des Rotorblatts 2, insbesondere des ersten Bereichs 3, in Schlagrichtung 9 den vorbestimmten, vorzugsweise im Wesentlichen über die Länge des zweiten Bereichs 4 konstanten, Mindestabstand 15 von dem Turm 11 der Windenergieanlage 1 einhält.

Wie in dieser Darstellung ersichtlich, verläuft der erste Bereich 3 des Rotorblatts 2 im Wesentlichen geradlinig zur Längsrichtung 12 des Rotorblatts 2. Der zweite Bereich 4 des Rotorblatts 2, welcher sich aus der Rotationsfläche 14 wenigstens teilweise nach oben heraus in einem Winkel α abknickend erstreckt, verläuft dabei ebenfalls im Wesentlichen geradlinig und zur Rotorblattspitze 6 hin verjüngend.

Der zweite Bereich 4 des Rotorblatts 2 und die Rotationsfläche 14 spannen beispielsweise einen Winkel α zwischen etwa 5° und etwa 90°, vorzugsweise zwischen etwa 10° und etwa 60°, weiter vorzugsweise zwischen etwa 20° und etwa 40°, und am bevorzugtesten von etwa 30°, auf.

Vorzugsweise betrifft das Ausbilden des zweiten Bereichs 4 des Rotorblatts 2 eine Biegesteifigkeit des zweiten Bereichs 4 in Schlagrichtung 9, eine Ausrichtung des zweiten Bereichs 4 zu dem ersten Bereich 3 und/oder eine etwaige Krümmung des zweiten Bereichs 4.

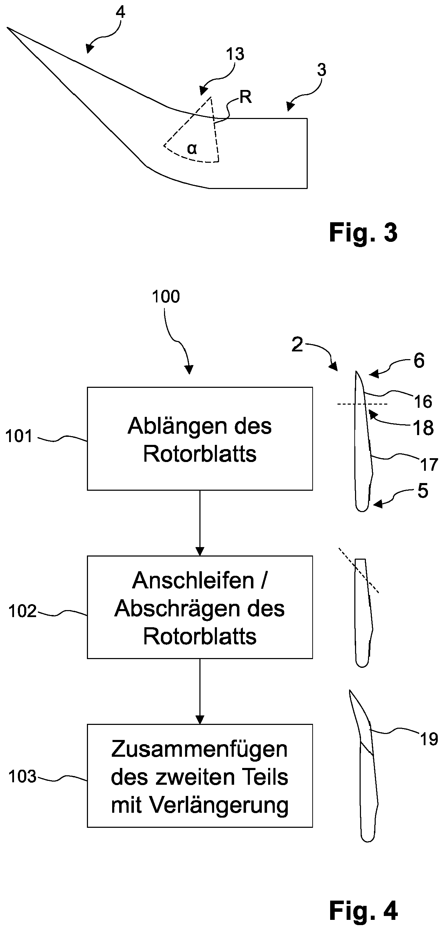

**Fig. 3** zeigt ein weiteres Ausführungsbeispiel eines Rotorblatts 2 im Querschnitt. Hierbei weist das Rotorblatt 2 im Bereich des Übergangs 13 vom ersten Bereich 3 zum zweiten Bereich 4 des Rotorblatts 2 eine Krümmung mit einem vorbestimmten Radius, vorzugsweise von etwa 10 cm bis etwa 1 m, weiter vorzugsweise von etwa 30 cm bis etwa 70 cm, am bevorzugtesten von etwa 50 cm, auf. Der Übergang 13 ist dabei vorzugsweise Bestandteil des ersten Bereichs 3 und/oder des zweiten Bereichs 4 des Rotorblatts 2.

Vorzugsweise entspricht der zweite Bereich 4 einem Anteil des Rotorblatts 2 von bis zu 30 %, vorzugsweise 2 % bis 20 %, weiter vorzugsweise 4 % bis 10 %, und am bevorzugtesten etwa 5 %.

**Fig. 4** zeigt ein Beispiel eines Flussdiagramms eines Verfahrens 100 zum Verlängern wenigstens eines Rotorblatts 2 für eine Windenergieanlage 1 mit einem Luv-Rotor.

In einem ersten Schritt 101 wird ein erster Teil 16 des Rotorblatts 2 abgelängt, welcher sich ausgehend von einem Ablängbereich 18 zur Rotorblattspitze 6 hin erstreckt. Dabei wird insbesondere das Rotorblatt 2 beginnend bei der Rotorblattspitze 7 wenigstens teilweise gekürzt.

In einem nächsten Schritt 102 wird ein zweiter Teil 17 des Rotorblatts 2, welcher sich von dem Ablängbereich 18 zur Rotorblattwurzel 5 hin erstreckt, in dem Ablängbereich 18 angeschliffen und/oder abgeschrägt. Dies dient insbesondere dazu, eine Erweiterung 19 zum Verlängern des Rotorblatts 2 optimiert an dem zweiten Teil 17 des Rotorblatts 2, insbesondere am Ablängbereich 18, zu befestigen.

In einem weiteren Schritt 103 wird der zweite Teil 17 des Rotorblatts 2 mit der Erweiterung 19 zum Verlängern des Rotorblatts 2 zusammengefügt, wobei der zweite Teil 17 des Rotorblatts 2 im montierten Zustand an der Windenergieanlage 1 bei Rotation eine Rotationsfläche 14 aufspannt, aus welcher sich die Erweiterung 19 zur Rotorblattspitze 6 hin im zusammengefügten Zustand wenigstens teilweise heraushebt.

Ferner ist die Erweiterung 19 in Abhängigkeit einer Länge, einer Krümmung und einer Biegesteifigkeit des zweiten Teils 17 des Rotorblatts 2 derart ausgebildet, sodass das zusammengefügte Rotorblatt 2 im montierten Zustand an der Windenergieanlage 1 während des Betriebs der Windenergieanlage 1 im Nennlastbereich, insbesondere unter Extremlast, bei einem durch den Wind verursachten Verbiegen des Rotorblatts 2, insbesondere des zweiten Teils 17, in Schlagrichtung 9 einen, vorzugsweise im Wesentlichen konstanten, vorbestimmten Mindestabstand 15 von einem Turm 11 der Windenergieanlage 1 einhält.

In einem Verfahren zum Konstruieren eines Rotorblatts 2 für eine Windenergieanlage 1 mit einem Luv-Rotor werden dessen Schalenteile in einer mehrteiligen, insbesondere radial teilbaren, Negativform ausgebildet, insbesondere laminiert, wobei ein erster Teil der Negativform einen ersten Bereich 3 des Rotorblatts 2, welcher sich ausgehend von der Rotorblattwurzel 5 radial nach außen hin erstreckt, beinhaltet und ein zweiter Teil der Negativform einen zweiten Bereich 4 des Rotorblatts 2, welcher an den ersten Bereich 3 des Rotorblatts 2 angrenzt und sich radial nach außen bis zu der Rotorblattspitze 6 hin erstreckt, wenigstens teilweise beinhaltet.

Des Weiteren ist der erste Teil der Negativform in der Weise ausgebildet, dass der erste Bereich 3 des Rotorblatts 2 im montierten Zustand an der Windenergieanlage 1 bei Rotation eine Rotationsfläche 14 aufspannt, und der zweite Teil der Negativform in der Weise ausgebildet, dass der zweite Bereich 4 des Rotorblatts 2 sich zur Rotorblattspitze 6 hin wenigstens teilweise aus der Rotationsfläche 14 heraushebt.

Der zweite Bereich 4 des Rotorblatts 2 wird dabei in Abhängigkeit einer Länge, einer Krümmung und einer Biegesteifigkeit des ersten Bereichs 3 des Rotorblatts 2 derart ausgebildet, sodass das Rotorblatt 2 in montiertem Zustand an der Windenergieanlage 1 während des Betriebs der Windenergieanlage 1 im Nennlastbereich, insbesondere unter Extremlast, bei einem durch den Wind verursachten Verbiegen des Rotorblatts 2, insbesondere des ersten Bereichs 3, in Schlagrichtung 9 einen vorbestimmten, vorzugsweise im Wesentlichen konstanten, Mindestabstand 15 von einem Turm 11 der Windenergieanlage 1 einhält.

Vorzugsweise wird ein Design des zweiten Teils der Negativform aus einer Vielzahl an möglichen Designs ausgewählt, welche im Zusammenhang mit dem ersten Teil der Negativform einen modularen Baukasten darstellen.

Der erste Teil und der zweite Teil der Negativform können ferner in einem Arbeitsschritt durch zusätzliche Befestigungsmittel verbunden werden.

Des Weiteren sind der erste Teil und/oder der zweite Teil der Negativform in der Weise ausgebildet, dass der zweite Bereich 4 des Rotorblatts 2 und die Rotationsfläche 14 einen Winkel zwischen etwa 5° und etwa 90°, vorzugsweise zwischen etwa 10° und etwa 60°, weiter vorzugsweise zwischen etwa 20° und etwa 40°, und am bevorzugtesten von etwa 30°, aufspannen.

Insbesondere sind der erste Teil und/oder der zweite Teil der Negativform in der Weise ausgebildet, dass das Rotorblatt 2 im Bereich eines Übergangs 13 vom ersten Bereich 3 zum zweiten Bereich 4 des Rotorblatts 2 eine Krümmung mit einem vorbestimmten Radius, vorzugsweise von etwa 10 cm bis etwa 1 m, weiter vorzugsweise von etwa 30 cm bis etwa 70 cm, am bevorzugtesten von etwa 50 cm, aufweist.

Es sei darauf hingewiesen, dass es sich bei den Ausführungsbeispielen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einem Ausführungsbeispiel gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Windenergieanlage
- 2: Rotorblatt
- 3: Erster Bereich
- 4: Zweiter Bereich
- 5: Rotorblattwurzel
- 6: Rotorblattspitze
- 7: Rotornabe
- 8: Gondel
- 9: Schlagrichtung
- 10: Abstand
- 11: Turm
- 12: Längsrichtung
- 13: Übergang
- 14: Rotationsfläche
- 15: Mindestabstand
- 16: erster Teil
- 17: zweiter Teil
- 18: Ablängbereich
- 19: Erweiterung
- α: Winkel
- R: Radius

## Patentansprüche

1. Rotorblatt (2) für eine Windenergieanlage (1) mit einem Luv-Rotor, wobei das Rotorblatt (2) einen ersten Bereich (3), welcher sich ausgehend von der Rotorblattwurzel (5) radial nach außen hin erstreckt, und einen zweiten Bereich (4), welcher an den ersten Bereich (3) angrenzt und sich radial nach außen bis zu der Rotorblattspitze (6) hin erstreckt, aufweist,
wobei der erste Bereich (3) im montierten Zustand an der Windenergieanlage (1) bei Rotation eine Rotationsfläche (14) aufspannt, aus welcher sich der zweite Bereich (4) heraushebt, und
wobei der zweite Bereich (4) in Abhängigkeit einer Länge, einer Krümmung und einer Biegesteifigkeit des ersten Bereichs (3) derart ausgebildet ist, sodass das Rotorblatt (2) in montiertem Zustand an der Windenergieanlage (1) während des Betriebs der Windenergieanlage (1) im Nennlastbereich, insbesondere unter Extremlast, bei einem durch den Wind verursachten Verbiegen des Rotorblatts (2), insbesondere des ersten Bereichs (3), in Schlagrichtung (9) einen vorbestimmten, vorzugsweise im Wesentlichen über die Länge des zweiten Bereichs (4) konstanten, Mindestabstand (15) von einem Turm (11) der Windenergieanlage (1) einhält.

2. Rotorblatt (2) nach Anspruch 1, wobei der zweite Bereich (4) in Längsrichtung (12) des Rotorblatts (2) im Wesentlichen geradlinig verläuft.

3. Rotorblatt (2) nach Anspruch 1 oder 2, wobei jeder Abschnitt des zweiten Bereichs (4) während des Betriebs der Windenergieanlage (1) im Nennlastbereich bei einem durch den Wind verursachten Verbiegen des Rotorblatts (2), insbesondere des ersten Bereichs (3), in Schlagrichtung (9) einen wenigstens im Wesentlichen konstanten Abstand (10) zu dem Turm (11) der Windenergieanlage (1) einhält, welcher wenigstens dem Mindestabstand (15) entspricht.

4. Rotorblatt (2) nach einem der vorhergehenden Ansprüche, wobei der zweite Bereich (4) und die Rotationsfläche (14) einen Winkel (α) zwischen etwa 5° und etwa 90°, vorzugsweise zwischen etwa 10° und etwa 60°, weiter vorzugsweise zwischen etwa 20° und etwa 40°, und am bevorzugtesten von etwa 30°, aufspannen.

5. Rotorblatt (2) nach wenigstens einem der vorhergehenden Ansprüche, wobei das Ausbilden des zweiten Bereichs (4) eine Biegesteifigkeit des zweiten Bereichs (4) in Schlagrichtung (9), eine Ausrichtung des zweiten Bereichs (4) zu dem ersten Bereich (3) und/oder eine etwaige Krümmung des zweiten Bereichs (4) betrifft.

6. Rotorblatt (2) nach wenigstens einem der vorhergehenden Ansprüche, wobei das Rotorblatt (2) im Bereich eines Übergangs (13) vom ersten Bereich (3) zum zweiten Bereich (4) eine Krümmung mit einem vorbestimmten Radius (R), vorzugsweise von etwa 10 cm bis etwa 1 m, weiter vorzugsweise von etwa 30 cm bis etwa 70 cm, am bevorzugtesten von etwa 50 cm, aufweist.

7. Rotorblatt (2) nach wenigstens einem der vorhergehenden Ansprüche, wobei der zweite Bereich (4) einem Anteil des Rotorblatts (2) von bis zu 30 %, vorzugsweise 2 % bis 20 %, weiter vorzugsweise 4 % bis 10 %, und am bevorzugtesten etwa 5 %, entspricht.

8. Windenergieanlage (1) aufweisend einen Luv-Rotor mit wenigstens zwei Rotorblättern (2) nach einem der vorhergehenden Ansprüche.

9. Verfahren (100) zum Verlängern wenigstens eines Rotorblatts (2) für eine Windenergieanlage (1) mit einem Luv-Rotor, insbesondere nach einem der Ansprüche 1 bis 7, folgende Schritte aufweisend:
- Ablängen (101) des Rotorblatts, wobei ein erster Teil (16) des Rotorblatts (2) sich ausgehend von einem Ablängbereich (18) zur Rotorblattspitze (6) hin erstreckt; und
- Zusammenfügen (103) eines zweiten Teils (17) des Rotorblatts (2), welcher sich von dem Ablängbereich (18) zur Rotorblattwurzel (5) hin erstreckt, mit einer Erweiterung (19) zum Verlängern des Rotorblatts (2),
wobei der zweite Teil (17) des Rotorblatts (2) im montierten Zustand an der Windenergieanlage (1) bei Rotation eine Rotationsfläche (14) aufspannt, aus welcher sich die Erweiterung (19) zur Blattspitze (6) hin im zusammengefügten Zustand wenigstens teilweise heraushebt, und
wobei die Erweiterung (19) in Abhängigkeit einer Länge, einer Krümmung und einer Biegesteifigkeit des zweiten Teils (17) des Rotorblatts (2) derart ausgebildet ist, sodass das zusammengefügte Rotorblatt (2) im montierten Zustand an der Windenergieanlage (1) während des Betriebs der Windenergieanlage (1) im Nennlastbereich, insbesondere unter Extremlast, bei einem durch den Wind verursachten Verbiegen des Rotorblatts (2), insbesondere des zweiten Teils (17), in Schlagrichtung (9) einen, vorzugsweise im Wesentlichen konstanten, vorbestimmten Mindestabstand (15) von einem Turm (11) der Windenergieanlage (1) einhält.

10. Verfahren (100) nach Anspruch 9, des Weiteren den folgenden Schritt aufweisend:
- Anschleifen und/oder Abschrägen (102) des zweiten Teils (17) des Rotorblatts (2) in dem Ablängbereich (18).

11. Verfahren zum Konstruieren eines Rotorblatts (2) für eine Windenergieanlage (1) mit einem Luv-Rotor, insbesondere nach einem der Ansprüche 1 bis 7, dessen Schalenteile in einer mehrteiligen, insbesondere radial teilbaren, Negativform ausgebildet, insbesondere laminiert, werden, wobei ein erster Teil der Negativform einen ersten Bereich (3) des Rotorblatts (2), welcher sich ausgehend von der Rotorblattwurzel (5) radial nach außen hin erstreckt, beinhaltet und ein zweiter Teil der Negativform einen zweiten Bereich (4) des Rotorblatts (2), welcher an den ersten Bereich (3) angrenzt und sich radial nach außen bis zu der Rotorblattspitze (6) hin erstreckt, wenigstens teilweise beinhaltet, wobei der erste Teil der Negativform in der Weise ausgebildet ist, dass der erste Bereich (3) des Rotorblatts (2) im montierten Zustand an der Windenergieanlage (1) bei Rotation eine Rotationsfläche (14) aufspannt, und wobei der zweite Teil der Negativform in der Weise ausgebildet ist, dass der zweite Bereich (4) des Rotorblatts (2) sich zur Blattspitze (6) hin wenigstens teilweise aus der Rotationsfläche (14) heraushebt und dass der zweite Bereich (4) des Rotorblatts (2) in Abhängigkeit einer Länge, einer Krümmung und einer Biegesteifigkeit des ersten Bereichs (3) des Rotorblatts (2) derart ausgebildet wird, sodass das Rotorblatt (2) in montiertem Zustand an der Windenergieanlage (1) während des Betriebs der Windenergieanlage (1) im Nennlastbereich, insbesondere unter Extremlast, bei einem durch den Wind verursachten Verbiegen des Rotorblatts (2), insbesondere des ersten Bereichs (3), in Schlagrichtung (9) einen vorbestimmten, vorzugsweise im Wesentlichen konstanten, Mindestabstand (15) von einem Turm (11) der Windenergieanlage (1) einhält.

12. Verfahren nach Anspruch 11, wobei ein Design des zweiten Teils der Negativform aus einer Vielzahl an möglichen Designs ausgewählt wird, welche im Zusammenhang mit dem ersten Teil der Negativform einen modularen Baukasten darstellen.

13. Verfahren nach Anspruch 11 oder 12, wobei der erste Teil und der zweite Teil der Negativform in einem Arbeitsschritt durch Befestigungsmittel verbunden werden.

14. Verfahren nach einem der Ansprüche Anspruch 11 bis 13, wobei der erste Teil und/oder der zweite Teil der Negativform in der Weise ausgebildet sind, dass der zweite Bereich (4) und die Rotationsfläche (14) einen Winkel (α) zwischen etwa 5° und etwa 90°, vorzugsweise zwischen etwa 10° und etwa 60°, weiter vorzugsweise zwischen etwa 20° und etwa 40°, und am bevorzugtesten von etwa 30°, aufspannen.

15. Verfahren nach einem der Ansprüche Anspruch 11 bis 14, wobei der erste Teil und/oder der zweite Teil der Negativform in der Weise ausgebildet sind, dass das Rotorblatt (2) im Bereich eines Übergangs (13) vom ersten Bereich (3) zum zweiten Bereich (4) eine Krümmung mit einem vorbestimmten Radius, vorzugsweise von etwa 10 cm bis etwa 1 m, weiter vorzugsweise von etwa 30 cm bis etwa 70 cm, am bevorzugtesten von etwa 50 cm, aufweist.
